# EUROPEAN PATENT SPECIFICATION

(11) **EP 3 314 689 B1**
(45) Date of publication and mention of the grant of the patent: **02.10.2019**
(21) Application number: 16840817.7
(22) Date of filing: 30.08.2016
(51) Int. Cl.: H01M 10/0567, H01M 10/052, H01M 4/525, H01M 4/505, H01M 4/38

(54) **NON-AQUEOUS ELECTROLYTE AND LITHIUM ION BATTERY**
WASSERFREIER ELEKTROLYT UND LITHIUM-IONEN-BATTERIE
ÉLECTROLYTE NON AQUEUX ET BATTERIE AU LITHIUM-ION

(30) Priority: 31.08.2015 CN 201510548371
(43) Date of publication of application: 02.05.2018
(73) Proprietor: BYD Company Limited, Shenzhen, Guangdong 518118 (CN)
(72) Inventor: QIAO, Feiyan, Shenzhen Guangdong 518118 (CN); WANG, Sheng, Shenzhen Guangdong 518118 (CN)
(74) Representative: Hoffmann Eitle
(86) International application number: PCT/CN2016/097393
(87) International publication number: WO 2017/036388

(56) References cited:
- EP-A1- 2 613 396
- CN-A- 102 544 586
- CN-A- 103 326 064
- JP-A- H10 228 928
- JP-A- 2002 352 804
- JP-A- 2002 352 804
- KR-A- 20120 104 854
- US-A1- 2003 003 358
- US-A1- 2011 281 178

## Description

### FIELD

The present disclosure relates to the field of lithium ion batteries, and in particular to a non-aqueous electrolyte and a lithium ion battery containing the same.

### BACKGROUND

Recently, secondary lithium ion batteries with high energy density have become objects concerned by people. Consequently, people also find some novel active materials available for the secondary lithium ion batteries. For instance, a high-voltage anode material LiNi_{0.5}Mn_{1.5}O₄ of which a voltage-platform is about 4.7V was disclosed once in the prior art, the rise of a working voltage thereof directly improves the service power of a battery, and the material is of great practical significance to application. However, at the present stage, most of lithium battery electrolyte systems may be steadily used only under the voltage of 4.5V or less. When the working voltage exceeds 4.5V, the electrolyte systems may be oxidatively decomposed, and as a result, the battery couldn't work normally. Therefore, existing electrolytes seriously hinder wide application of high-voltage anode materials.

JP 2002-352804 describes a non-aqueous secondary battery wherein the positive electrode contains thiophosphoric acid ester or a salt thereof.

KR 2012-0104854 relates to a lithium secondary battery wherein parathione represents an example of an organophosphorus solvent which can be used for the formation of spinel lithium titanium oxide anodes.

US 2003/0003358 describes an electrolyte used in a battery which comprises a compound that chemically interferes with flame propagation. An example of such a compound is diethylphenylthiophosphate.

### SUMMARY

In view of the above technical problems, the present disclosure provides in embodiments a novel non-aqueous electrolyte. The novel non-aqueous electrolyte includes phosphorothioates having a unique structure in the present disclosure. Electrons in a molecule of the unique-structured phosphorothioates can be automatically gathered to a certain end of the molecule, such that the whole molecule is negatively charged. When two ends of a battery generate voltages, the molecule will be instantaneously adsorbed to the surface of an anode, and therefore the anode is protected from contacting the electrolyte, thereby isolating a reaction therebetween, and stopping degradation of the electrolyte on the surface of the anode.

Specifically, the present disclosure provides a non-aqueous electrolyte, including a lithium salt, a non-aqueous solvent and a first additive including phosphorothioates having a structure shown as formula 1 or is O-(2,6-dichloro-4-tolyl)O,O-dimethyl phosphorothioate: 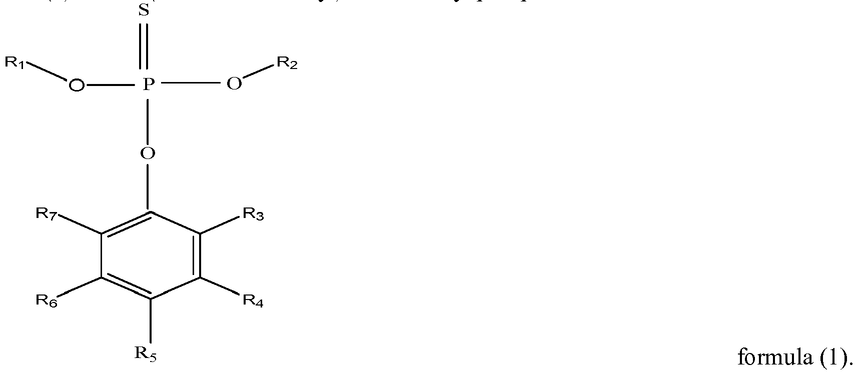 each R₁ and R₂ are independently selected from a group consisting of -(CH₂)n-CH₃, -(CH₂)n-CF₃; n is an integer of 0 to 4; each R₃ to R₇ are independently selected from a group consisting of -CN, -F, -Cl, -Br, -CF₃ and -H; and at least one of R₃ to R₇ is selected from -CN, -F, -Cl, -Br or -CF₃.

In the present disclosure, the first additive of the present disclosure is added into a non-aqueous electrolyte. The first additive includes an organic phosphorothioate molecule having a structure shown as formula (1). One end of the molecule is a benzene ring with a strongly polar group, a strong electron withdrawing effect is provided, and therefore the whole molecule will be negatively charged. After a voltage is generated between an anode and cathode of a battery, the first additive will be instantaneously adsorbed to the surface of the anode, and the adsorption capacity will be increased along with the increase of the anode voltage. After the first additive is adsorbed on the surface of the anode, a contact between the anode and the electrolyte can be cut off, and a reaction therebetween is stopped, thereby preventing degradation of the electrolyte on the surface of the anode, and achieving a function of protecting film forming of the anode.

The present disclosure further provides in embodiments a lithium ion battery, which includes a housing, a core accommodated in the housing and having an anode, a cathode and a separator disposed between the anode and the cathode, and a non-aqueous electrolyte above-mentioned which is also accommodated in the housing, the anode includes an anode active substance, the cathode includes a cathode active substance.

The present disclosure can effectively improve, by adding the first additive of the present disclosure such as the phosphorothioates having a structure shown as formula (1) into the non-aqueous electrolyte, the electric potential of oxidative decomposition of the non-aqueous electrolyte. The non-aqueous electrolyte of the present disclosure is configured to prepare a lithium ion battery, and the obtained battery not only has higher charge-discharge performance, but also is high in capacity retention ratio after cycle, low in deformation before and after cycle, and long in service life.

### DETAILED DESCRIPTION

The present disclosure provides a non-aqueous electrolyte, including a lithium salt, a non-aqueous solvent and a first additive. The first additive includes phosphorothioates having a structure shown as formula (1) or is O-(2,6-dichloro-4-tolyl)O,O-dimethyl phosphorothioate: 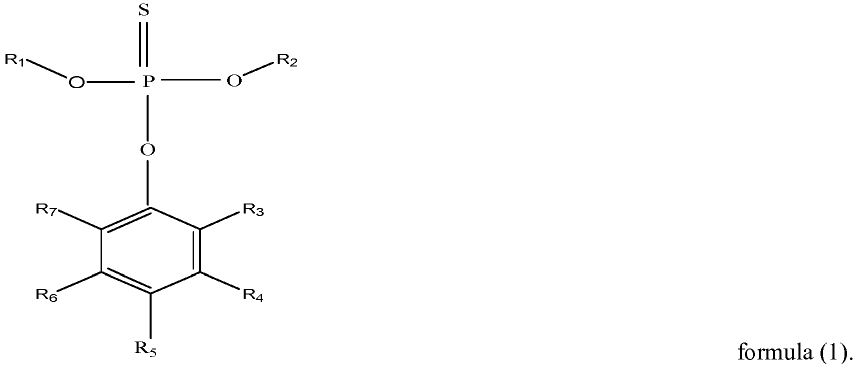 each R₁ and R₂ are independently selected from a group consisting of -(CH₂)n-CH₃, -(CH₂)n-CF₃; n is an integer of 0 to 4; each R₃ to R₇ are independently selected from a group consisting of -CN, -F, -Cl, -Br, -CF₃ and -H; and at least one of R₃ to R₇ is selected from -CN, -F, -Cl, -Br or -CF₃.

The inventor of the present disclosure accidentally found that the addition of the phosphorothioates having the structure shown as formula (1) of the present disclosure in the non-aqueous electrolyte can greatly improve the electric potential of oxidative decomposition of the non-aqueous electrolyte. The phosphorothioates having the structure shown as formula (1) of the present disclosure can be adsorbed to an anode of a battery in situ, when the voltage of the battery is higher, the phosphorothioates can be more firmly adsorbed, and when the voltage drops, desorption occurs. This kind of characteristic not only can form a protective film on the anode of the battery to prevent the electrolyte from being oxidized on the surface of the anode of the battery, but also does not have any impact on the performance of the electrolyte.

In some embodiments, R₅ is -CN, and R₃, R₄, R₆ and R₇ are hydrogen atoms.

In some embodiments, both R₁ and R₂ are methyl or ethyl.

In some embodiments, both R₁ and R₂ are methyl, R₅ is -CN, and R₃, R₄, R₆ and R₇ are -H; and in this case, the phosphorothioates having the structure shown as formula (1) of the present disclosure is O-4-cyanophenyl O,O-dimethyl phosphorothioate.

In some embodiments, in the non-aqueous electrolyte, the first additive is of a content of about 0.1% to 10%, based on the total weight of the non-aqueous electrolyte. In some other embodiments, the first additive is of a content of about 0.5% to 1.5%.When the content of the first additive is over-high, the charge-discharge capacity of the battery will be affected, and when the content of the first additive is over-low, the electric potential of oxidative decomposition of the non-aqueous electrolyte is not obviously improved.

In some embodiments, the non-aqueous solvent may be selected from at least one of a carboxylic ester solvent, a carbonic ester solvent, a nitrile solvent or a ketone solvent. In some embodiments, the non-aqueous solvent is selected from one or more of ethyl methyl carbonate (EMC), dimethyl carbonate (DMC), diethyl carbonate (DEC), ethylene carbonate (EC), propylene carbonate (PC), butylene carbonate (BC), ethylene sulfite (ES), propylene sulfite (PS), diethyl sulfite (DES), γ-butyrolactone (BL), dimethyl sulfoxide (DMSO), ethyl acetate and methyl acetate. In some embodiments, the non-aqueous solvent is selected from one or more of carbonates such as EMC, DMC and DEC. In some specific embodiments, the non-aqueous solvent is a mixture of EMC, DMC and DEC, and a mass ratio of EMC to DMC to DEC is about 2:1:3 to 2:3:1.

When the content ratio of the first additive to the non-aqueous solvent falls within the above range, the prepared lithium ion battery may have a higher charge-discharge capacity, better cycle performance and longer service life.

In some embodiments, the lithium salt can be selected from one or more of LiPF₆, LiClO₄, LiBF₄, LiAsF₆, LiClO₄, LiSiF₆, LiAlCl₄, LiBOB, LiODFB, LiCl, LiBr, LiI, LiCF₃SO₃, Li(CF₃CO₂)₂N, Li(CF₃SO₂)₂N or Li(SO₂C₂F₅)₂N. In some embodiments, the lithium salt is of a weight of about 8.5wt% to 18.5wt% of the total weight of the electrolyte. In some embodiments, the present disclosure adopts LiPF₆ as the lithium salt, the concentration thereof is about 8.5wt% to 18.5wt%, and is about 10wt% to 16wt%.

In some embodiments, the non-aqueous electrolyte further includes a second additive, and the second additive includes LiBOB or vinylene carbonate.

Because vinylene carbonate or LiBOB has excellent cathode film forming performance, an excellent SEI film can be formed on the surface of a cathode by using the vinylene carbonate or LiBOB as the second additive, and the cathode is protected from being eroded by the electrolyte. The phosphorothioates having a structure shown as formula (1) in the present application, serving as the first additive, is added into the non-aqueous electrolyte to be mainly capable of forming a protective film on the surface of an anode material so as to isolate a side reaction between the anode material and the electrolyte. Thus, the cooperative usage of the first additive and the second additive can protect the anode and cathode of the battery simultaneously. By applying the non-aqueous electrolyte, to which the first additive and the second additive are added, to a battery, the prepared battery may have high energy density and high charge-discharge capacity. Particularly, cooperative application of the non-aqueous electrolyte and a high-voltage electrode material to a high-voltage system may achieve an extremely obvious effect.

In some embodiments, a mass ratio of the first additive to the second additive is about 1:3 to 3:1. The inventor of the present application found that the prepared battery has, when the mass ratio of the first additive to the second additive is controlled within the above range, optimal cycle performance and charge-discharge performance.

In some embodiments, all the components including the lithium salt, the non-aqueous solvent and various additives are mixed in argon gloves. A exemplifying method of the present disclosure includes: dissolving the lithium salt in the non-aqueous solvent inside an argon glove box; and then adding the first additive of the present disclosure or a mixture of the first additive and the second additive so as to obtain a non-aqueous electrolyte.

The present disclosure also provides a lithium ion battery, which includes a housing, a core accommodated in the housing and having an anode, a cathode and a separator disposed between the anode and the cathode, and a non-aqueous electrolyte mentioned above. The anode includes an anode collector and an anode material disposed on the surface of the anode collector. The anode material includes an anode active substance, an anode conductive agent and an anode binder. The anode active substance, the anode conductive agent and the anode binder may be an anode active substance, an anode conductive agent and an anode binder. In some embodiments, the anode active substance is one or more of LiNi_{0.5}Mn_{1.5}O₄, LiNi₁₋ₓMnₓO₂, LiNi₁₋ₓCoₓO₂, LiNi_{1-y-z} Co_{y}Mn_{z}O₂ and LiNi_{1-y-z} Co_{y}Al_{z}O₂, where 0≤x≤1, y≥0, z≥0, and y+z≤1. The anode conductive agent is one or more of acetylene black and a carbon nano tube. The anode binder is polyvinylidene fluoride. The cathode includes a cathode collector and a cathode material disposed on the surface of the cathode collector. The cathode material includes a cathode active substance and a cathode binder. The cathode material may also selectively include a cathode conductive agent. The cathode conductive agent may be identical to or different from the anode conductive agent. The cathode active substance and the cathode binder may be a cathode active substance and a cathode binder. For instance, the cathode active substance may be a lithium metal, a lithium-aluminum alloy, graphite, modified graphite, hard carbon, modified hard carbon or the like. In some embodiments, the cathode active substance is a lithium metal sheet.

The present disclosure only relates to improvement on an electrolyte of an existing lithium ion battery, and does not specially limit other components and structure of the lithium ion battery.

A preparation method for a lithium ion battery of the present disclosure includes: providing a separator between a prepared anode and cathode; winding or folding to form a core; accommodating the core in a battery housing; injecting an electrolyte; and then sealing the battery housing to prepare a lithium ion battery.

The non-aqueous electrolyte provided by the present disclosure has better high-voltage resistance and higher electric potential of oxidative decomposition. Meanwhile, a battery prepared from the non-aqueous electrolyte has a better cycle performance and charge-discharge performance.

The lithium ion battery provided by the present disclosure has a higher energy density and first charge-discharge performance, and has an excellent storage performance and cycle performance at high temperature.

The non-aqueous electrolyte and the lithium ion battery containing the same of the present disclosure will be further illustrated below in conjunction with embodiments.

### Embodiment 1

### (1) Preparation of non-aqueous electrolyte:

100 parts by weight of non-aqueous solvents from EC, DEC and DMC in a ratio of 2:1:3 in an argon glove box were prepared, 12 parts by weight of LiPF₆ were dissolved into the prepared non-aqueous solvents, and then 1 part by weight of O-4-cyanophenyl O,O-dimethyl phosphorothioates (phosphorothioates having structure shown as formula (1) of the present disclosure was added, both R₁ and R₂ are -CH₃, R₅ is -CN, and R₃, R₄, R₆ and R₇ are hydrogen atoms), thereby obtaining a non-aqueous electrolyte of the present embodiment, which was recorded as C1; and

### (2) Preparation of lithium ion battery:

An anode active substance (LiNi_{0.5}Mn_{1.5}O₄), acetylene black and polyvinylidene fluoride in a ratio of 90:5:5 were uniformly mixed to obtain a mixture, and then the mixture was pressed onto an aluminum foil to obtain an anode sheet; a lithium metal sheet was provided as a cathode sheet; and a PE/PP composite separator was provided as an ion exchange membrane, and a button battery S1 was made from the non-aqueous electrolyte Cl of the present embodiment

### Embodiment 2

A non-aqueous electrolyte and a button battery were prepared using the steps identical to those in embodiment 1. except for that: O-4-cyanophenyl O,O-dimethyl phosphorothioate was replaced with 1 part by weight of O-(2,6-dichloro-4-tolyl)O,O-dimethyl phosphorothioates (phosphorothioates having a structure shown as formula (1) of the present disclosure, all of R₁, R₂ and R₅ are -CH₃, both R₃ and R₇ are -Cl, and both R₄ and R₆ are -H) in step (1), thereby preparing a non-aqueous electrolyte C2 and a button battery S2.

### Embodiment 3

A non-aqueous electrolyte and a button battery were prepared using the steps identical to those in embodiment 1, except for that: 1 part by weight of vinylene carbonate was further added in step (1), thereby preparing a non-aqueous electrolyte C3 and a button battery S3.

### Embodiment 4

A non-aqueous electrolyte and a button battery were prepared using the steps identical to those in embodiment 1, except for that: 0.5 parts by weight of vinylene carbonate and 0.5 parts by weight of LiBOB were further added in Step (1), thereby preparing a non-aqueous electrolyte C4 and a button battery S4.

### Embodiment 5

A non-aqueous electrolyte and a button battery were prepared using the steps identical to those in embodiment 1, except for that: 0.5 parts by weight of LiBOB were further added in step (1), thereby preparing a non-aqueous electrolyte C5 and a button battery S5.

### Embodiment 6

A non-aqueous electrolyte and a button battery were prepared using the steps identical to those in embodiment 1, except for that: in step (2), the anode active substance was replaced with LiNi_{0.5}Mn_{0.5}O₂, and the cathode active substance was replaced with a lithium metal sheet, thereby preparing a non-aqueous electrolyte C6 and a button battery S6.

### Embodiment 7

A non-aqueous electrolyte and a button battery were prepared using the steps identical to those in embodiment 1. Differently, in Step (2), an anode active substance was replaced with LiNi_{0.5}Mn_{0.5}O₂, and a cathode active substance was replaced with graphite, thereby preparing a non-aqueous electrolyte C7 and a button battery S7.

### Comparison example 1

A non-aqueous electrolyte and a button battery were prepared using the steps identical to those in embodiment 1, except for that: in step (1), O-4-cyanophenyl O,O-dimethyl phosphorothioate was replaced with 0.5 parts by weight of p-tolunitrile, thereby preparing a non-aqueous electrolyte DC1 and a button battery DS1.

### Comparison example 2

A non-aqueous electrolyte and a button battery were prepared using the steps identical to those in embodiment 1, except for that: in step (1), O-4-cyanophenyl O,O-dimethyl phosphorothioate was replaced with 0.8 parts by weight of diethyl(cyanomethyl)phosphonate, thereby preparing a non-aqueous electrolyte DC2 and a button battery DS2.

### Embodiment 8

A non-aqueous electrolyte and a button battery were prepared using the steps identical to those in embodiment 1, except for that: in step (1), 12 parts by weight of O-4-cyanophenyl O,O-dimethyl phosphorothioate were added, thereby preparing a non-aqueous electrolyte DC3 and a button battery DS3.

### Embodiment 9

A non-aqueous electrolyte and a button battery were prepared using the steps identical to those in embodiment 1, except for that: in step (1), 0.08 parts by weight of O-4-cyanophenyl O,O-dimethyl phosphorothioate were added, thereby preparing a non-aqueous electrolyte DC4 and a button battery DS4.

### Performance test

### (1) Test on electric potential of oxidative decomposition of electrolyte under high voltage:

The non-aqueous electrolytes C1 to C7 prepared in the embodiments 1 to 7 and the non-aqueous electrolytes DC1 to DC4 prepared in the comparison examples 1 to 2 and embodiments 8 to 9 were placed into a container, using a platinum sheet as a working electrode, lithium sheets as a counter electrode and a reference electrode, tests were performed by using an electrochemical workstation, a linear sweep voltammetry (LSV) program was adopted for performing sweep, an open circuit voltage (OCV) was tested under a sweep interval of 3 to 7V, and a sweep rate of 2mV, a test result is shown in Table 1.

**Table 1**

| Electrolyte | Oxidative decomposition /V |
|---|---|
| C1 | 5.8 |
| C2 | 5.6 |
| C3 | 5.3 |
| C4 | 5.2 |
| C5 | 5.3 |
| C6 | 5.8 |
| C7 | 5.7 |
| DC1 | 4.7 |
| DC2 | 4.6 |
| DC3 | 6.0 |
| DC4 | 4.9 |

### (2) Test on specific capacity of battery under high voltage:

All experimental batteries S1 to S7 and DS1 to DS4 were charged under a constant current of 0.1C at normal temperature until a cutoff voltage reached 4.9V, these batteries were discharged under the same current until the cutoff voltage reached 3.0V, and a charge-discharge capacity was recorded, a result was shown in Table 2.

### (3) Test on battery cycle:

These batteries S1 to S7 and DS1 to DS4 were installed on a secondary battery performance tester BS-9300 via a correct method, these batteries were charged under a constant current of 1C and a constant voltage until the cutoff voltage reaches 4.9V, these battery was rested for 5 minutes, these batteries were discharged under a current of 1C until the cutoff voltage reached 3.0V, and then these batteries were charged under a constant current of 1C and a constant voltage until the cutoff voltage reached 4.9V under a constant current of 1C and a constant voltage, and these charge and discharge steps were repeated for 100 times. After the cycle was ended, the temperature of these batteries restored to be normal, these batteries were fully charged under a current of 1C and then were discharged under a current of 0.2C until the cutoff voltage reached 3.0V, thereby obtaining a residual capacity, and a capacity retention rate was obtained by dividing the residual capacity by a first cycle capacity, a result was shown in Table 2.

| Battery number | First charge capacity/mAh | First discharge capacity/mAh | First charge-discharge efficiency/% | Capacity retention rate after cycle for 100 times/% |
|---|---|---|---|---|
| S1 | 133 | 148 | 89.8 | 85 |
| S2 | 125 | 150 | 83.2 | 78 |
| S3 | 126 | 147 | 85.7 | 75 |
| S4 | 115 | 148 | 77.7 | 70 |
| S5 | 120 | 140 | 85.7 | 80 |
| S6 | 124 | 144 | 86.1 | 75 |
| S7 | 124 | 146 | 84.9 | 70 |
| DS1 | 70 | 110 | 63.6 | 30 |
| DS2 | 75 | 109 | 68.8 | 32 |
| DS3 | 90 | 140 | 64.3 | 30 |
| DS4 | 85 | 175 | 48.6 | 25 |

From Table 1 and Table 2, it can be seen that the minimum electric potential of oxidative decomposition of the non-aqueous electrolyte provided by the present disclosure is 5.2V, while the electric potential of oxidative decomposition of the non-aqueous electrolytes, to which p-tolunitrile and diethyl(cyanomethyl)phosphonate are added, in comparison example 1 and comparison example 2 are only 4.6V and 4.7V, and the content of the phosphorothioates having a structure shown as Formula (1) of the present disclosure, added similarly to embodiment 8 and embodiment 9, is higher or lower than the content range of the present application. Although the electric potential of oxidative decomposition of the non-aqueous electrolyte can be still improved, the inventor of the present disclosure found that when the non-aqueous electrolyte is applied to a battery, the cycle performance and charge-discharge performance of the battery are affected; and meanwhile, from Table 2, it can also be seen that the maximum capacity retention rate of a battery sample with the electrolyte provided according to the present disclosure after repeating for 100 times is 85%, the minimum capacity retention rate is 70%, and the maximum capacity retention rate of battery samples prepared in the comparison examples after repeating for 100 times is only 32%. Thus, it can be seen that the electrolyte provided by the present disclosure has a good high-voltage resistance, and the cycle performance of the battery with the electrolyte provided by the present disclosure is effectively improved.

## Claims

1. A non-aqueous electrolyte, comprising a lithium salt, a non-aqueous solvent and a first additive,
wherein the first additive includes phosphorothioates having a structure shown as formula (1) or is O-(2,6-dichloro-4-tolyl)O,O-dimethyl phosphorothioate: 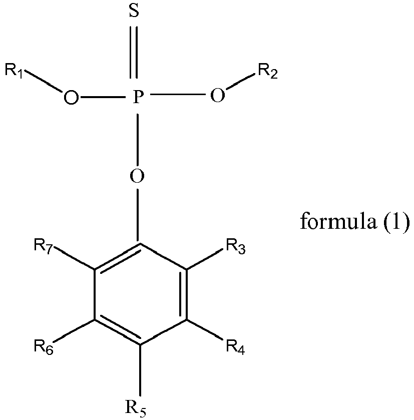
wherein each R₁ and R₂ are independently selected from a group consisting of -(CH₂)n-CH₃ and -(CH₂)n-CF₃,
n is an integer of 0 to 4;
each R₃ to R₇ are independently selected from a group consisting of -CN, -F, -Cl, -Br, -CF₃ and -H; and
at least one of R₃ to R₇ is selected from -CN, -F, -Cl, -Br or -CF₃.

2. The non-aqueous electrolyte according to claim 1, wherein R₅ is -CN, and R₃, R₄, R₆ and R₇ are -H.

3. The non-aqueous electrolyte according to claim 1 or 2, wherein both R₁ and R₂ are methyl or ethyl.

4. The non-aqueous electrolyte according to any one of claims 1 to 3, wherein both R₁ and R₂ are methyl, R₅ is -CN, and R₃, R₄, R₆ and R₇ are -H.

5. The non-aqueous electrolyte according to any one of claims 1 to 4, wherein the first additive is of a content of 0.1% to 10% based on the total mass of the non-aqueous electrolyte.

6. The non-aqueous electrolyte according to any one of claims 1 to 5, wherein the first additive is of a content of 0.5% to 1.5% based on the total mass of the non-aqueous electrolyte.

7. The non-aqueous electrolyte according to any one of claims 1 to 6, further comprising a second additive including LiBOB or vinylene carbonate.

8. The non-aqueous electrolyte according to claim 7, wherein a mass ratio of the first additive to the second additive is 1:3 to 3:1.

9. A lithium ion battery, comprising:
a housing,
a core accommodated in the housing and having an anode, a cathode and a separator disposed between the anode and the cathode, and
a non-aqueous electrolyte according to any one of claims 1 to 8 accommodated in the housing,
wherein the anode comprises an anode active substance, and the cathode comprises a cathode active substance.

10. The lithium ion battery according to claim 9, wherein the anode active substance is at least one selected from a group consisting of LiNi_{0.5}Mn_{1.5}O₄, LiNi₁₋ₓMnₓO₂, LiNi₁₋ₓCoₓO₂, LiNi_{1-y-z} Co_{y}Mn_{z}O₂ and LiNi_{1-y-z} Co_{y}Al_{z}O₂, wherein 0≤x≤1, y≥0, z≥0, and y+z≤1; and the cathode active substance includes lithium metal.

## Patentansprüche

1. Nicht-wässriger Elektrolyt, enthaltend ein Lithiumsalz, ein nicht-wässriges Lösungsmittel und ein erstes Additiv,
worin das erste Additiv Phosphorothioate mit einer Struktur gemäß Formel (1) enthält oder O-(2,6-Dichlor-4-tolyl)-O,O-dimethylphosphorothioat ist: 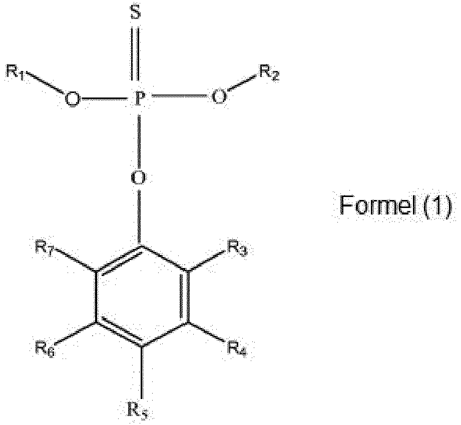
worin R₁ und R₂ jeweils unabhängig ausgewählt sind aus einer Gruppe bestehend aus -(CH₂)n-CH₃ und -(CH₂)n-CF₃,
n eine ganze Zahl von 0 bis 4 ist,
R₃ bis R₇ jeweils unabhängig ausgewählt sind aus einer Gruppe bestehend aus -CN, -F, -Cl, -Br, -CF₃ und -H und
zumindest eines von R₃ bis R₇ ausgewählt ist aus -CN, -F, -Cl, -Br oder -CF₃.

2. Nicht-wässriger Elektrolyt gemäß Anspruch 1, worin R₅ -CN und R₃, R₄, R₆ und R₇-H sind.

3. Nicht-wässriger Elektrolyt gemäß Anspruch 1 oder 2, worin R₁ und R₂ jeweils Methyl oder Ethyl sind.

4. Nicht-wässriger Elektrolyt gemäß einem der Ansprüche 1 bis 3, worin R₁ und R₂ jeweils Methyl, R₅ -CN und R₃, R₄, R₆ und R₇ -H sind.

5. Nicht-wässriger Elektrolyt gemäß einem der Ansprüche 1 bis 4, worin das erste Additiv einen Gehalt von 0,1 bis 10 % hat, bezogen auf die Gesamtmasse des nicht-wässrigen Elektrolyten.

6. Nicht-wässriger Elektrolyt gemäß einem der Ansprüche 1 bis 5, worin das erste Additiv einen Gehalt von 0,5 bis 1,5 % hat, bezogen auf die Gesamtmasse des nicht-wässrigen Elektrolyten.

7. Nicht-wässriger Elektrolyt gemäß einem der Ansprüche 1 bis 6, weiterhin enthaltend ein zweites Additiv, einschließlich LiBOB oder Vinylencarbonat.

8. Nicht-wässriger Elektrolyt gemäß Anspruch 7, worin ein Massenverhältnis des ersten Additivs zum zweiten Additiv 1:3 bis 3:1 ist.

9. Lithiumionenbatterie, enthaltend:
ein Gehäuse,
einen Kern, der im Gehäuse untergebracht ist und eine Anode, eine Kathode und einen Separator, der zwischen der Anode und der Kathode angeordnet ist, enthält, und einen nicht-wässrigen Elektrolyten gemäß einem der Ansprüche 1 bis 8, der im Gehäuse untergebracht ist,
worin die Anode eine Anoden-Aktivsubstanz enthält und die Kathode eine Kathoden-Aktivsubstanz enthält.

10. Lithiumionenbatterie gemäß Anspruch 9, worin die Anoden-Aktivsubstanz zumindest eine ist, ausgewählt aus der Gruppe bestehend aus LiNi_{0,5}Mn_{1,5}O₄, LiNi₁₋ₓMnₓO₂, LiNi₁₋ₓCoₓO₂, LiNi_{1-y-z}Co_{y}Mn_{z}O₂ und LiNi_{1-y-x}Co_{y}Al_{z}O₂, worin 0≤x≤1, y≥0, z≥0 und y+z≤1<, und die Kathoden-Aktivstubstanz Lithiummetall enthält.

## Revendications

1. Electrolyte non aqueux, comprenant un sel de lithium, un solvant non aqueux et un premier additif, dans lequel le premier additif inclut des phosphorothioates ayant une structure représentée par la formule (1) ou est un phosphorothioate de O-(2,6-dichloro-4-tolyl)O,O-diméthyle : 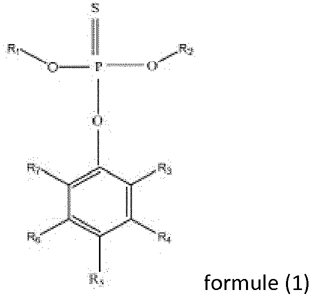
dans lequel R₁ et R₂ sont chacun sélectionnés indépendamment à partir d'un groupe constitué par -(CH₂)n-CH₃ et -(CH₂)n-CF₃,
n est un entier de 0 à 4 ;
R₃ à R₇ sont chacun sélectionnés indépendamment à partir d'un groupe constitué par -CN, -F, -Cl, -Br, -CF₃ et -H ; et
au moins un de R₃ à R₇ est sélectionné à partir de -CN, -F, -Cl, -Br ou -CF₃.

2. Electrolyte non aqueux selon la revendication 1, dans lequel R₅ est -CN et R₃, R₄, R₆ et R₇ sont -H.

3. Electrolyte non aqueux selon la revendication 1 ou 2, dans lequel R₁ et R₂ sont tous deux un méthyle ou un éthyle.

4. Electrolyte non aqueux selon l'une quelconque des revendications 1 à 3, dans lequel R₁ et R₂ sont un méthyle, R₅ est -CN, et R₃, R₄, R₆ et R₇ sont -H.

5. Electrolyte non aqueux selon l'une quelconque des revendications 1 à 4, dans lequel le premier additif a une teneur de 0,1 % à 10 % sur la base de la masse totale de l'électrolyte non aqueux.

6. Electrolyte non aqueux selon l'une quelconque des revendications 1 à 5, dans lequel le premier additif a une teneur de 0,5 % à 1,5 % sur la base de la masse totale de l'électrolyte non aqueux.

7. Electrolyte non aqueux selon l'une quelconque des revendications 1 à 6, comprenant en outre un second additif incluant du LiBOB ou du carbonate de vinylène.

8. Electrolyte non aqueux selon la revendication 7, dans lequel un rapport massique du premier additif au second additif est compris entre 1: 3 et 3 : 1.

9. Batterie au lithium-ion comprenant :
un boîtier,
un noyau logé dans le boîtier et ayant une anode, une cathode et un séparateur disposé entre l'anode et la cathode, et
un électrolyte non aqueux selon l'une quelconque des revendications 1 à 8 logé dans le boîtier,
dans laquelle l'anode comprend une substance active d'anode, et la cathode comprend une substance active de cathode.

10. Batterie au lithium-ion selon la revendication 9, dans laquelle la substance active d'anode est au moins une sélectionnée à partir d'un groupe constitué par LiNi_{0,5}Mn_{1,5}O₄, Lini₁₋ₓMnₓO₂, Lini₁₋ₓCoₓO₂, LiNi_{1-y-z}Co_{y}Mn_{z}O₂ et LiNi_{1-y-z}Co_{y}Al_{z}O₂, dans laquelle 0≤x≤1, y≥0, z≥0 et y+z≤1 ; et la substance active de cathode inclut du lithium métallique.
